# EUROPÄISCHE PATENTSCHRIFT

(11) **EP 0 572 073 B1**
(45) Veröffentlichungstag und Bekanntmachung des Hinweises auf die Patenterteilung: **20.08.1997**
(21) Anmeldenummer: 93201442.6
(22) Anmeldetag: 19.05.1993
(51) Int. Cl.: G11B 15/675, G11B 17/04

(54) **Aufzeichnungs- und/oder Wiedergabegerät für eine einen Aufzeichnungsträger enthaltende Kassette**
Recording and/or reproducing apparatus for a cassette containing a record carrier
Appareil d'enregistrement et/ou de reproduction pour une cassette comportant un support d'enregistrement

(30) Priorität: 27.05.1992 AT 1106/92
(43) Veröffentlichungstag der Anmeldung: 01.12.1993
(73) Patentinhaber: Philips Electronics N.V., 5621 BA Eindhoven (NL)
(72) Erfinder: Veigl, Johann, NL-5656 AA Eindhoven (NL)
(74) Vertreter: Rolfes, Johannes Gerardus Albertus

(56) Entgegenhaltungen:
- EP-A- 0 406 943
- EP-A- 0 438 144
- EP-A- 0 444 623
- EP-A- 0 549 376
- US-A- 4 787 006

## Beschreibung

Die Erfindung bezieht sich auf ein Aufzeichnungs- und/oder Wiedergabegerät für eine einen Aufzeichnungsträger enthaltende Kassette, die ein quaderförmiges Gehäuse mit einer Deckenwand, einer Bodenwand und vier Seitenwänden, von denen mindestens eine mit mindestens einer Durchgangsöffnung versehen ist, und einen zwischen einer Schließstellung und einer Offenstellung verstellbaren Verschlußteil zum Verschließen der Durchgangsöffnung aufweist, mit einer zum Aufnehmen einer Kassette vorgesehenen Kassettenaufnahmeeinrichtung und mit einer mm Verstellen des Verschlußteiles der von der Kassettenaufnahmeeinrichtung gehaltenen Kassette vorgesehenen Verstelleinrichtung, die einen verstellbaren Trägerteil und einen von dem Trägerteil in einer Abstehrichtung abstehenden, mit dem Verschlußteil der Kassette in Eingriff bringbaren Verstellstift aufweist, der bei einer quer zu seiner Abstehrichtung erfolgenden Relativbewegung zwischen ihm und dem Verschlußteil dessen Verstellung steuert.

Ein solches Gerät gemäß der in dem vorstehenden ersten Absatz angeführten Gattung ist beispielsweise aus der DE 40 33 095 A1 bekannt. Bei diesem bekannten Gerät weist die Verstelleinrichtung zum Verstellen des Verschlußteiles einer ein Magnetband als Aufzeichnungsträger enthaltenden Kassette einen zylindrischen Verstellstift mit einer durchgehend glatten Mantelfläche auf. Aufgrund der Tatsache, daß die Raumverhältnisse im Bereich des Verschlußteiles einer Kassette knapp bemessen sind und daher für die Relativlagen zwischen dem Verstellstift und dem Verschlußteil nur enge Toleranzgrenzen möglich sind, besteht wegen der durchgehend glatten Mantelfläche des Verstellstiftes die Gefahr, daß beispielsweise bei Erschütterungen des Gerätes oder bei einer Stoßbelastung des Gerätes der Verstellstift parallel zu seiner Abstehrichtung eine Relativbewegung gegenüber dem Verschlußteil ausführt und sich dabei von dem Verschlußteil weg bewegt, wobei der Verstellstift außer Eingriff von dem Verschlußteil der Kassette kommen kann, was ein unerwünschtes Lösen der Wirkverbindung zwischen dem Verstellstift und dem Verschlußteil zur Folge hat. Das Auftreten eines solchen unerwünschten Trennens der Wirkverbindung zwischen dem Verstellstift und dem Verschlußteil stellt eine Betriebsstörung dar, die eine Beschädigung der Kassette bzw. eine Beschädigung von mit der Kassette zusammenwirkenden geräteseitigen Bauteilen zur Folge haben kann, was selbstverständlich unerwünscht ist.

Die Erfindung hat sich zur Aufgabe gestellt, die vorstehend angeführten Schwierigkeiten zu vermeiden und bei einem Gerät der im ersten Absatz angeführten Gattung dafür zu sorgen, daß der Verstellstift stets mit Sicherheit mit dem Verschlußteil in Eingriff bleibt, nachdem der Verstellstift mit dem Vershlußteil in Wirkverbindung getreten ist. Hierfür ist die Erfindung dadurch gekennzeichnet, daß der Verstellstift mindestens eine im wesentlichen quer zu seiner Abstehrichtung verlaufende Abstufung aufweist und daß bei von dem Verstellstift in seine Offenstellung gesteuertem Verschlußteil der Verschlußteil mit einem Abschnitt desselben die Abstufung des Verstellstiftes hintergreift und den Verstellstift formschlüssig gegen eine Verstellung desselben parallel zu seiner Abstehrichtung blockiert. Hierdurch ist auf besonders einfache Weise erreicht, daß der Verstellstift keine unerwünschte Relativbewegung parallel zu seiner Abstehrichtung gegenüber dem Verschlußteil ausführen kann, solange sich der Verstellstift mit dem Verschlußteil in Wirkverbindung befindet, so daß einer wie bei dem bekannten Gerät möglichen Betriebsstörung mit Sicherheit vorgebeugt ist.

Der Verstellstift kann beispielsweise einen dreieckigen oder viereckigen Querschnitt aufweisen und einen von einer Seitenwand desselben quer zu seiner Abstehrichtung abstehenden Ansatz aufweisen, von dem eine Begrenzungswand die Abstufung des Verstellstiftes bildet. Bei einem Gerät, bei dem der Verstellstift zylindrisch ausgebildet ist, hat sich aber als besonders vorteilhaft erwiesen, wenn die Abstufung durch einen axialen Begrenzungsbereich eines Einstiches in dem zylindrisch ausgebildeten Verstellstift gebildet ist. Dies ist im Hinblick auf ein möglichst reibungsarmes und sicheres Zusammenwirken des Verstellstiftes mit dem Verschlußteil und zusätzlich im Hinblick auf eine möglichst einfache Herstellung der Abstufung des Verstellstiftes vorteilhaft, da diese im Zuge eines einfachen Drehvorganges herstellbar ist.

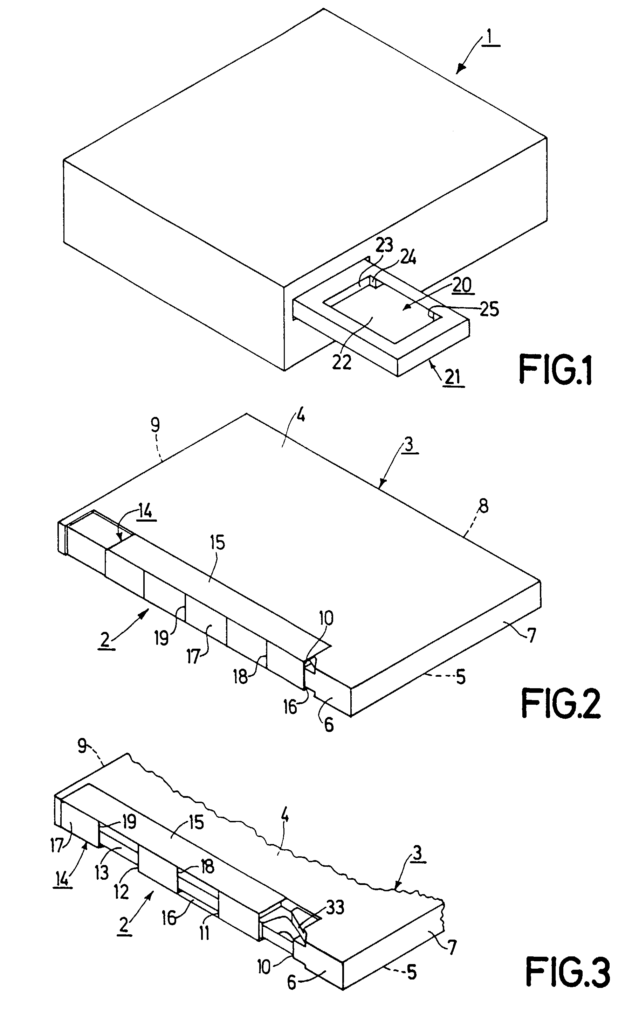

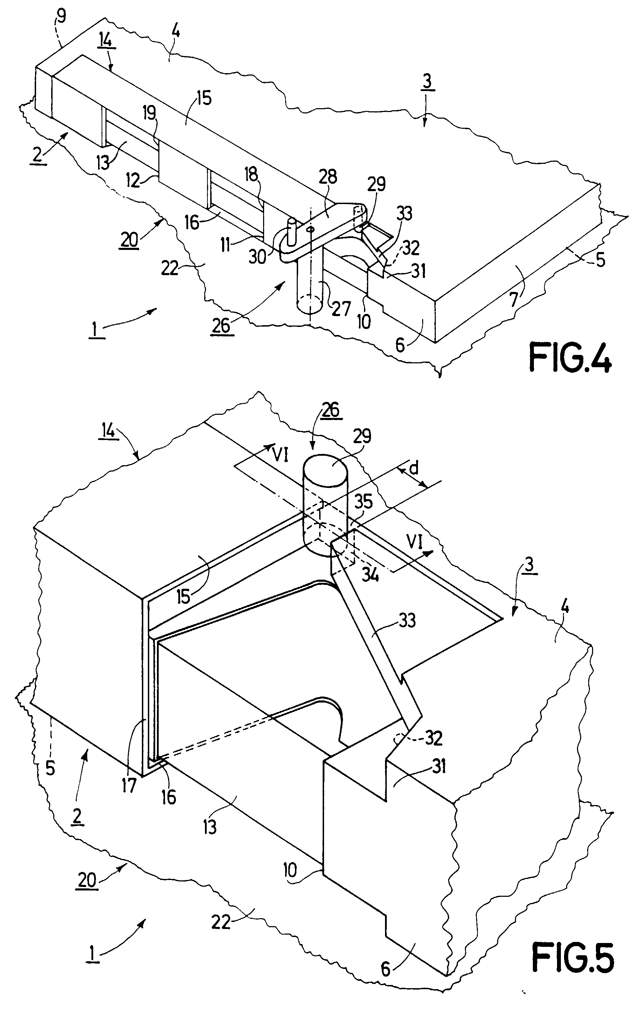

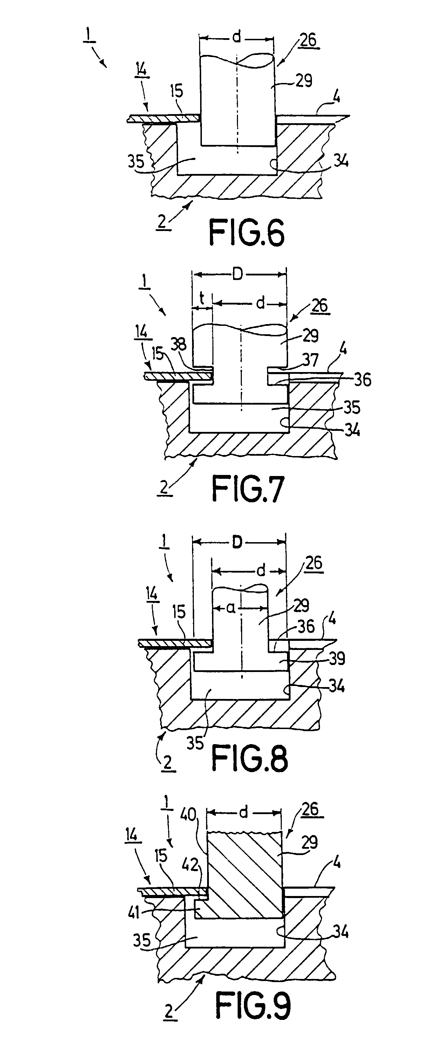

Die Erfindung wird im folgenden anhand von einigen Ausführungsbeispielen näher erläutert, auf die die Erfindung jedoch nicht beschränkt sein soll. Die Fig. 1 zeigt schematisch in Schrägansicht ein Aufzeichnungs- und Wiedergabegerät für eine ein Magnetband als Aufzeichnungsträger enthaltende Kassette, das eine an einer aus dem Gerät ausschiebbaren und in das Gerät einziehbaren Lade angebrachte Kassettenaufnahmeeinrichtung zum Aufnehmen der Kassette aufweist. Die Fig. 2 zeigt schematisch in Schrägansicht eine in das Gerät gemaß Fig. 1 einsetzbare Kassette, die einen zwischen einer Schließstellung und einer Offenstellung verschiebbaren Verschlußteil aufweist, der in Fig. 2 in seiner Schließstellung befindlich dargestellt ist. Die Fig. 3 zeigt auf analoge Weise wie die Fig. 2 die Kassette gemäß Fig. 2, wobei ein Teil derselben weggerissen ist und wobei der Verschlußteil in seiner Offenstellung befindlich dargestellt ist. Die Fig. 4 zeigt auf analoge Weise wie die Fig. 3, jedoch in einem gegenüber der Fig. 3 größeren Maßstab einen Teil der Kassette gemäß den Figuren 2 und 3 sowie einen im vorliegenden Zusammenhang wesentlichen Teil einer Verstelleinrichtung zum Verstellen des Verschlußteiles der Kassette, die einen einfach zylindrisch ausgebildeten Verstellstift aufweist, was dem derzeit bekannten Stand der Technik entspricht. Die Fig. 5 zeigt in einem gegenüber der Fig. 4 deutlich größeren Maßstab ein Detail der Kassette gemäß den Figuren 2 bis 4, aus dem das Zusammenwirken des Verstellstiftes der in Fig. 4 dargestellten Verstelleinrichtung mit Wandabschnitten der Kassette und mit dem Verschlußteil der Kassette ersichtlich ist. Die Fig. 6 zeigt in einem Schnitt gemäß der Linie VI-VI in Fig. 5 den Verstellstift der in Fig. 4 dargestellten Verstelleinrichtung samt den mit diesem Verstellstift bei in seine Offenstellung verstelltem Verschlußteil zusammenwirkenden Teilen der Kassette gemäß den Figuren 2 bis 5. Die Fig. 7 zeigt auf analoge Weise wie die Fig. 6 einen Verstellstift einer Verstelleinrichtung eines erfindungsgemäßen Aufzeichnungs- und Wiedergabegerätes, wobei der Verstellstift ebenfalls zylindrisch ausgebildet ist, jedoch einen Einstich zum Zusammenwirken mit dem Verschlußteil einer Kassette aufweist. Die Fig. 8 zeigt auf analoge Weise wie die Figuren 6 und 7 einen Verstellstift einer Verstelleinrichtung eines weiteren erfindungsgemäßen Aufzeichnungs- und Wiedergabegerätes, wobei der Verstellstift ebenso zylindrisch ausgebildet ist, jedoch einen in seinem Durchmesser gegenüber dem übrigen Verstellstift größeren Endbereich aufweist. Die Fig. 9 zeigt auf analoge Weise wie die Figuren 6, 7 und 8 einen Verstellstift einer Verstelleinrichtung eines weiteren erfindungsgemäßen Aufzeichnungs- und Wiedergabegerätes, wobei der Verstellstift einen rechteckförmigen oder quadratischen Querschnitt aufweist und im Bereich seines freien Endes einen von ihm seitlich abstehenden Fortsatz aufweist.

Die Fig. 1 zeigt auf schematische Weise ein Aufzeichnungs- und Wiedergabegerät 1, das zum Aufzeichnen und Wiedergeben von Informationssignalen, beispielsweise Sprachsignalen oder Musiksignalen, auf einem Magnetband ausgebildet ist. Das Magnetband ist hierbei in einer Kassette 2 untergebracht, die zumindest teilweise in den Figuren 2, 3, 4, 5 und 6 schematisch dargestellt ist.

Die Kassette 2 weist ein quaderförmiges Gehäuse 3 mit einer Deckenwand 4, einer Bodenwand 5, die in den Figuren 2, 3, 4 und 5 nicht sichtbar ist, und vier Seitenwänden 6, 7, 8 und 9 auf, von denen die beiden Seitenwände 8 und 9 in den Figuren 2, 3 und 4 ebenfalls nicht sichtbar sind. In der vorderen langen Seitenwand 6 des Gehäuses 3 der Kassette 2 sind drei Durchgangsöffnungen 10, 11 und 12 vorgesehen. Die Durchgangsöffnung 10 erstreckt sich hierbei zusätzlich auch in die Deckenwand 4 und in die Bodenwand 5 des Gehäuses 3 der Kassette 2. Die Durchgangsöffnung 12 erstreckt sich zusätzlich auch in die Bodenwand 5 des Gehäuses 3 der Kassette 2. Durch die Durchgangsöffnungen 10, 11 und 12 ist das in der Kassette 2 untergebrachte Magnetband 13, das hierbei in der Kassette 2 zwischen zwei nicht dargestellten, rotierend antreibbaren Wickelkernen verläuft, für mindestens einen Magnetkopf, der durch die Durchgangsöffnung 11 hindurchtreten kann, und für zwei Andruckrollen zugänglich, die durch die Durchgangsöffnungen 10 und 12 mit dem Magnetband 13 in Wirkverbindung treten können und dabei das Magnetband 13 gegen Antriebswellen drücken, die durch die in der Bodenwand 5 vorgesehenen Bereiche der Durchgangsöffnungen 10 und 12 in die Kassette 2 hinter das Magnetband 13 einführbar sind. Auf die Ausbildung der Durchgangsöffnung 10 im Bereich der Deckenwand 4 ist nachfolgend noch anhand der Figuren 4 und 5 näher eingegangen.

Zum Verschließen der Durchgangsöffnungen 10, 11 und 12 ist die Kassette 2 mit einem Verschlußteil 14 versehen. Der Verschlußteil 14 ist durch einen im Querschnitt im wesentlichen U-förmig ausgebildeten Blechteil gebildet, der einen plattenförmigen, parallel zur Deckenwand 4 verlaufenden ersten Schenkelteil 15, einen plattenförmigen, parallel zur Bodenwand 5 verlaufenden zweiten Schenkelteil 16 und einen plattenförmigen, parallel zur vorderen langen Seitenwand 6 verlaufenden Stegteil 17 aufweist. In dem Stegteil 17 sind zwei Fenster 18 und 19 vorgesehen, wobei sich das Fenster 19 auch in den zweiten Schenkelteil 16 hinein erstreckt. Der U-förmige Verschlußteil 14 ist zwischen einer in Fig. 2 dargestellten Schließstellung und einer in Fig. 3 dargestellten Offenstellung verstellbar, wobei der Verschlußteil 14 zwischen diesen beiden Stellungen hin und her verschiebbar geführt ist, worauf aber hier nicht näher eingegangen ist. Im Bereich des zweiten Schenkelteiles 16 greift an dem Verschlußteil 14 eine zwischen dem zweiten Schenkelteil 16 und der Bodenwand 5 des Gehäuses 3 vorgesehene, nicht dargestellte Rückstellfeder an, die danach trachtet, den Verschlußteil 14 in seiner Schließstellung zu halten.

Wie aus Fig. 1 ersichtlich ist, weist das Gerät 1 zum Aufnehmen einer Kassette 2 eine Kassettenaufnahmeeinrichtung 20 auf, die an einer aus dem Gerät 1 herausschiebbaren und in das Gerät 1 einziehbaren Lade 21 angebracht ist. Die Kassettenaufnahmeeinrichtung 20 ist im wesentlichen wannenförmig ausgebildet und weist eine Bodenwand 22 und Seitenwände auf, von denen in der Figur 1 eine Seitenwand 23 und eine weitere Seitenwand 24 sichtbar sind. In der Seitenwand 24 ist eine Durchgangsöffnung 25 vorgesehen, in deren Bereich die mit den Durchgangsöffnungen 10, 11 und 12 versehene Seitenwand 6 einer Kassette 2 zu liegen kommt, wenn die Kassette 2 in die Kassettenaufnahmeeinrichtung 20 eingesetzt ist. Durch die Durchgangsöffnung 25 in der Seitenwand 24 der Kassettenaufnahmeeinrichtung 20 können der vorerwähnte Magnetkopf und die Andruckrollen mit dem Magnetband 13 in der Kassette 2 in Wirkverbindung gebracht werden. Durch die Durchgangsöffnung 25 in der Seitenwand 24 kann weiters eine an der Kassettenaufahmeeinnichtung 20 angebrachte Verstelleinrichtung 26 zum Verstellen des U-förmigen Verschlußteiles 14 der Kassette 2 mit dem Verschlußteil 14 in Wirkverbindung gebracht werden, worauf nachfolgend noch anhand der Figuren 4 und 5 näher eingegangen ist.

Wenn die Lade 21 des Gerätes 1 aus dem Gerät 1 herausgeschoben ist, kann eine Kassette 2 in die Kassettenaufnahmeeinrichtung 20 eingesetzt werden, was in der Weise zu erfolgen hat, daß die Seitenwand 6 des Gehäuses 3 der Kassette 2 der Seitenwand 24 der Kassettenaufnahmeeinrichtung 20 gegenüberliegt. Nachfolgend kann die Lade 21 auf nicht näher dargestellte und beschriebene Weise in das Gerät 1 eingezogen werden. Während dieses Einziehvorganges tritt mit dem U-förmigen Verschlußteil 14 der Kassette 2 die Verstelleinrichtung 26 in Wirkverbindung, die schematisch in Fig. 4 dargestellt ist.

Die Verstelleinrichtung 26 besteht im wesentlichen aus einem mittels einer Welle 27 an der Bodenwand 22 der Kassettenaufnahmeeinrichtung 20 schwenkbar gelagerten Hebel 28, der einen Trägerteil für einen Verstellstift 29 der Verstelleinrichtung 26 bildet. Der Verstellstift 29 steht von dem Hebel 28 an dessen einem Ende in einer Abstehrichtung ab, die senkrecht zum Hebel 28 verläuft und somit parallel zur Achse der Welle 27 und senkrecht zu der Deckenwand 4 des Gehäuses 3 der Kassette 2 ausgerichtet ist. Der Verstellstift 29 ist mit dem U-förmigen Verschlußteil 14 der Kassette 2 in Eingriff bringbar und der Verstellstift 29 steuert bei einer quer zu seiner Abstehrichtung erfolgenden Relativbewegung zwischen ihm und dem U-förmigen Verschlußteil 14 dessen Verstellung zwischen seiner Schließstellung und seiner Offenstellung, worauf nachfolgend noch eingegangen ist. Wie aus den Figuren 4 und 5 ersichtlich ist, ist der Verstellstift 29 einfach zylindrisch mit einer durchgehend glatten Mantelfläche ausgebildet, was dem derzeit bekannten Stand der Technik entspricht.

Die Verstelleinrichtung 26 weist weiters einen vom Hebel 28 an dessen vom Verstellstift 29 abgewandten Ende in entgegengesetzter Abstehrichtung wie der Verstellstift 29 abstehenden Steuerstift 30 auf. Über diesen Steuerstift 30 ist die Verstelleinrichtung 26 steuerbar, um die Verstelleinrichtung 26 bzw. den Verstellstift 29 derselben beim Verstellen der Lade 21 von ihrer aus dem Gerät 1 herausgeschobenen Position in ihre in das Gerät 1 eingezogene Position mit dem Verschlußteil 14 der Kassette 2 in Eingriff zu bringen. An dem Steuerstift 30 greift eine nicht dargestellte Verstellfeder an, die danach trachtet, den Verstellstift 29 mit der Kassette 2 bzw. mit dem Verschlußteil 14 der Kassette 2 in Eingriff zu bringen. Weiters greift an dem Steuerstift 30 eine ebenfalls nicht dargestellte, in dem Gerät 1 angebrachte mechanische Steuereinrichtung an, mit der das Wirksamwerden der ebenfalls am Steuerstift 30, angreifenden Verstellfeder gesteuert werden kann. Da diese Details in vorliegendem Zusammenhang nicht wesentlich sind, sind sie der Einfachheit halber nicht dargestellt.

Beim vorerwähnten Verstellen der Lade 21 aus der aus dem Gerät 1 herausgeschobenen Position in ihre in das Gerät 1 eingezogene Position wird der Verstellstift 29 wie vorstehend beschrieben, von der mechanischen Steuereinrichtung zum Zusammenwirken mit der Kassette 2 bzw. dem Verschlußteil 14 der Kassette 2 unter der Kraftwirkung der Verstellfeder freigegeben. Dabei wird über die am Steuerstift 30 angreifende Verstellfeder der Verstellstift 29 zuerst an einen an die Deckenwand 4 angrenzenden Wandbereich 31 der Seitenwand 6 angelegt. In weiterer Folge gleitet der Verstellstift 29 entlang eines gegenüber der Seitenwand 6 relativ steil geneigten Wandabschnittes 32, der die Durchgangsöffnung 10 in der Seitenwand 6 bzw. in der Deckenwand 4 begrenzt. Während der Verstellstift 29 entlang des Wandabschnittes 32 gleitet, kommt derselbe mit dem ersten Schenkelteil 15 des Verschlußteiles 14 in Eingriff, indem der Verstellstift 29 gegen den ersten Schenkelteil 15 des Verschlußteiles 14 stößt. In weiterer Folge gleitet der Verstellstift 29 entlang eines zur Seitenwand 6 relativ flach geneigten Wandabschnittes 33, der ebenfalls die Durchgangsöffnung 10 in der Seitenwand 6 bzw. in der Deckenwand 4 begrenzt. Während der Verstellstift 29 entlang des Wandabschnittes 33 gleitet, nimmt derselbe den ersten Schenkelteil 15 und damit den U-förmig Verschlußteil 14 mit. In weiterer Folge erreicht der Verstellstift 29 das Ende des Wandabschnittes 33, wonach der Verstellstift 29 unter der Wirkung der am Steuerstift 30 angreifenden Verstellfeder entlang eines senkrecht zur Seitenwand 6 verlaufenden, die Durchgangsöffnung 10 begrenzenden Wandabschnittes 34 gleitet. Diese Verstellung des Verstellstiftes 29 erfolgt so lange, bis der Verstellstift 29 an dem parallel zur Seitenwand 6 verlaufenden, die Durchgangsöffnung 10 begrenzenden Wandabschnitt 35 zur Anlage kommt. In dieser Position des Verstellstiftes 29 verbleibt derselbe, wobei der Verstellstift 29 unter der Kraftwirkung der auf den U-förmigen Verschlußteil 14 einwirkenden Rückstellfeder von dem ersten Schenkelteil 15 des U-förmigen Verschlußteiles 14 gegen den senkrecht zur Seitenwand 6 verlaufenden Wandabschnitt 34 gedrückt gehalten wird, wie dies in den Figuren 4 und 5, aber auch in Fig. 6 dargestellt ist. Bei einem Durchmesser d des Verstellstiftes 29 ist somit das Ende des Verschlußteiles 14 bzw. des ersten Schenkelteiles 15 desselben in einem Abstand d, der dem Durchmesser d des Verstellstiftes 29 gleich ist, von dem Wandabschnitt 34 gehalten, wie dies klar aus Fig. 6 ersichtlich ist. Auf diese Weise ist durch entsprechende Wahl des Durchmessers d des Verstellstiftes 29 die Position des Verschlußteiles 14 in dessen Offenstellung in Relation zu dem Wandabschnitt 34 festlegbar.

Bei einer solchen wie vorstehend anhand der Figuren 4 und 5 beschriebenen Ausbildung des Verstellstiftes, die dem derzeit bekannten Stand der Technik entspricht, hat sich gezeigt, daß, beispielsweise bei Erschütterungen des Gerätes 1 oder bei einer Stoßbelastung des Gerätes 1, aufgrund der durchgehend glatt ausgebildeten Mantelfläche des zylindrischen Verstellstiftes 29 dieser Verstellstift 29 parallel zu seiner Abstehrichtung eine Relativbewegung gegenüber dem Vershlußteil 14 bzw. gegenüber dessen ersten Schenkelteil 15 ausführt und sich dabei von dem ersten Schenkelteil 15 in der Abstehrichtung weg bewegt, wobei dann der Verstellstift 29 außer Eingriff von dem ersten Schenkelteil 15 des Verschlußteiles 14 der Kassette 2 kommen kann, was ein unerwünschtes Lösen der Wirkverbindung zwischen dem Verstellstift 29 und dem Verschlußteil 14 zur Folge hat. Das Auftreten eines solchen unerwünschten Trennens der Wirkverbindung zwischen dem Verstellstift 29 und dem Verschlußteil 14 stellt eine Betriebsstörung dar, die eine Beschädigung der Kassette 2 bzw. eine Beschädigung von mit der Kassette 2 bzw. mit dem in der Kassette 2 untergebrachten Magnetband 13 zusammenwirkenden geräteseitigen Bauteilen, wie einem Magnetkopf bzw. Andruckrollen, zur Folge haben kann, was selbstverständlich unerwünscht ist.

Zur Vermeidung der vorstehend beschriebenen Schwierigkeiten, wie sie bei einer wie in den Figuren 4, 5 und 6 dargestellten Ausbildung eines Verstellstiftes einer Verstelleinrichtung auftreten, ist nunmehr, wie dies in Fig. 7 dargestellt ist, bei einem Aufzeichnungs- und Wiedergabegerät 1 gemäß einem ersten Ausführungsbeispiel der Erfindung mit einer Verstelleinrichtung 26 zum Verstellen eines Verschlußteiles 14 der Verstellstift 29 der Verstelleinrichtung 26 mit zwei im wesentlichen quer zu seiner Abstehrichtung verlaufenden Abstufungen 36 und 37 versehen. Wie ebenfalls die Fig. 7 zeigt, hintergreift bei von dem Verstellstift 29 in seine Offenstellung gesteuertem Verschlußteil 14 der Verschlußteil 14 mit einem Abschnitt desselben, nämlich mit dem ersten Schenkelteil 15, die Abstufungen 36 und 37 des Verstellstiftes 29. Auf diese Weise blockiert der erste Schenkelteil 15 des Verschlußteiles 14 den Verstellstift 29 formschlüssig gegen eine Verstellung desselben parallel zu seiner Abstehrichtung. Bei der in Fig. 7 dargestellten Ausbildung, bei der der Verstellstift 29 an sich zylindrisch ausgebildet ist, sind die Abstufungen 36 und 37 je durch einen axialen Begrenzungsbereich eines Einstiches 38 in dem zylindrisch ausgebildeten Verstellstift 29 gebildet. Hierbei weist der Verstellstift 29 einen Durchmesser D auf und ist die Tiefe t des Einstiches 38 so gewählt, daß der Abstand d zwischen der an dem Wandabschnitt 34 anliegenden Berührungserzeugenden des Verstellstiftes 29 und der dieser Berührungserzeugenden diametral gegenüberliegenden Bodenerzeugenden des Einstiches 38, an der das freie Ende des ersten Schenkelteiles 15 des Verschlußteiles 14 anliegt, gleich groß wie der Durchmesser d des Verstellstiftes 29 der Verstelleinrichtung 26 des Gerätes gemäß den Figuren 1, 4, 5 und 6 ist. Auf diese Weise ist erreicht, daß bei dem Gerät gemäß Fig. 7 der Verschlußteil 14 der Kassette 2 in seiner Offenstellung dieselbe Position gegenüber dem Wandabschnitt 34 einnimmt, wie dies auch bei dem Gerät gemäß den Figuren 1, 4, 5 und 6 der Fall ist.

Durch das Vorsehen des Einstiches im zylindrischen Verstellstift des Gerätes gemäß der Fig. 7 ist auf besonders einfache Weise erreicht, daß der Verstellstift keine unerwünschte Relativbewegung parallel zu seiner Abstehrichtung gegenüber dem Verschlußteil ausführen kann, solange sich der Verstellstift mit dem Verschlußteil in Wirkverbindung befindet, so daß einem unerwünschten Trennen der Wirkverbindung zwischen dem Verstellstift und dem Verschlußteil mit Sicherheit vorgebeugt ist und daher keine durch ein solches unerwünschtes Trennen verursachte Betriebsstörung auftreten kann. Das Anbringen eines solchen Einstiches in dem Verstellstift der Verstelleinrichtung erfolgt in einem einfachen Drehvorgang und stellt nur einen minimalen Zusatzaufwand dar, durch den aber eine sehr hohe Betriebssicherheit der Verstelleinrichtung erreicht wird.

Bei einem Aufzeichnungs- und Wiedergabegerät 1 gemäß einem zweiten Ausführungsbeispiel der Erfindung gemäß Fig. 8 weist der Verstellstift 29 der Verstelleinrichtung 26 nur eine im wesentlichen quer zu seiner Abstehrichtung verlaufende Abstufung 36 auf, die hierbei durch einen axialen Begrenzungsbereich eines gegenüber dem Verstellstift 29 einen größeren Durchmesser aufweisenden zylindrischen Endbereiches 39 des Verstellstiftes 29 gebildet ist. Hierbei weist der Endbereich 39 einen Durchmesser D und der Verstellstift 29 einen Durchmesser a auf, wobei diese beiden Durchmesser D und a so gewählt sind, daß der Abstand d zwischen der am Wandabschnitt 34 anliegenden Berührungserzeugenden des Endbereiches 39 und der dieser Berührungserzeugenden diametral gegenüberliegenden Erzeugenden des Verstellstiftes 29, an dem der erste Schenkelteil 15 des Verschlußteiles 14 anliegt, ebenso gleich groß wie der Durchmesser d des Verstellstiftes 29 der Verstelleinrichtung 26 des Gerätes gemäß den Figuren 1, 4, 5 und 6 ist. Auf diese Weise ist erreicht, daß bei dem Gerät gemäß Fig. 8 der Verschlußteil 14 der Kassette 2 in seiner Offenstellung dieselbe Position gegenüber dem Wandabschnitt 34 einnimmt, wie dies auch bei den beiden Geräten gemäß den Figuren 1,4, 5 und 6 und gemäß Fig. 7 der Fall ist.

Bei einem Aufzeichnungs- und Wiedergabegerät 1 gemäß einem dritten Ausführungsbeispiel der Erfindung gemäß Fig. 9 weist der Verstellstift 29 der Verstelleinrichtung 26 einen rechteckigen bzw. quadratischen Querschnitt in Bezug auf seine Abstehrichtung auf, wobei die zwischen dem Wandabschnitt 34 und dem Ende des ersten Schenkelteiles 15 des Verschlußteiles 14 sich erstreckenden Seitenwände des Verstellstiftes 29 eine Länge d aufweisen, die gleich groß wie der Durchmesser d des Verstellstiftes 29 der Verstelleinrichtung 26 des Gerätes gemäß den Figuren 1, 4, 5 und 6 ist. Auf diese Weise ist erreicht, daß bei dem Gerät gemäß Fig. 9 der Verschlußteil 14 der Kassette 2 in seiner Offenstellung dieselbe Position gegenüber dem Wandabschnitt 34 einnimmt, wie dies auch bei den drei Geräten gemäß den Figuren 1, 4, 5 und 6, gemäß Fig. 7 und gemäß Fig. 8 der Fall ist.

Der Verstellstift 29 weist bei dem Gerät gemäß Fig. 9 im Bereich seiner dem Verschlußteil 14 zugewandten Seitenwand 40 einen von demselben seitlich abstehenden Fortsatz 41 auf, dessen dem ersten Schenkelteil 15 des Verschlußteiles 14 zugewandte Begrenzungswand 42 eine Abstufung des Verstellstiftes 29 bildet, die der Verschlußteil 14 mit seinem ersten Schenkelteil 15 hintergreift, wenn der Verschlußteil 14 von dem Verstellstift 29 in seine Offenstellung gesteuert ist. Wie aus Fig. 9 ersichtlich ist, verläuft die Begrenzungswand 42 des Fortsatzes 41 des Verstellstiftes 29 parallel zum plattenförmigen ersten Schenkelteil 15 des Verschlußteiles 14. Diese Begrenzungswand kann aber auch geringfügig abgeschrägt gegenüber dem ersten Schenkelteil 15 des Verschlußteiles 14 ausgebildet sein.

Auch bei den beiden Geräten entsprechend den Ausführungsbeispielen gemäß den Figuren 8 und 9 werden im wesentlichen dieselben Vorteile erhalten wie bei dem Gerät entsprechend dem Ausführungsbeispiel gemäß Fig.7.

Die Erfindung wurde vorstehend anhand von Geräten für Magnetbandkassetten beschrieben. Die Erfindung ist aber auch bei Geräten für andere Kassetten anwendbar, beispielsweise für Kassetten, die einen optisch oder magnetisch abtastbaren kreisscheibenförmigen Aufzeichnungsträger enthalten. Weiters ist die Erfindung auch bei Geräten anwendbar, die eine anders ausgebildete Verstelleinrichtung aufweisen, beispielsweise bei Geräten, wie diese in der EP O 438 144 A2 oder in der EP O 248 908 A1 geoffenbart sind.

## Patentansprüche

1. Aufzeichnungs- und/oder Wiedergabegerät (1) für eine einen Aufzeichnungsträger (13) enthaltende Kassette (2), die ein quaderförmiges Gehäuse (3) mit einer Deckenwand (4), einer Bodenwand (5) und vier Seitenwänden (6,7, 8,9), von denen mindestens eine (6) mit mindestens einer Durchgangsöffnung (10, 11, 12) versehen ist, und einen zwischen einer Schließstellung und einer Offenstellung verstellbaren Verschlußteil (14) zum Verschließen der Durchgangsöffnung (10, 11, 12) aufweist, mit einer zum Aufnehmen einer Kassette (2) vorgesehenen Kassettenaufnahmeeinrichtung (20) und mit einer zum Verstellen des Verschlußteiles (14) der von der Kassettenaufnahmeeinrichtung (20) gehaltenen Kassette (2) vorgesehenen Verstelleinrichtung (26), die einen verstellbaren Trägerteil (28) und einen von dem Trägerteil (28) in einer Abstehrichtung abstehenden, mit dem Verschlußteil (14) der Kassette (2) in Eingriff bringbaren Verstellstift (29) aufweist, der bei einer quer zu seiner Abstehrichtung erfolgenden Relativbewegung zwischen ihm und dem Verschlußteil (14) dessen Verstellung steuert, dadurch gekennzeichnet, daß der Verstellstift (29) mindestens eine im wesentlichen quer zu seiner Abstehrichtung verlaufende Abstufung (36,37; 42) aufweist und daß bei von dem Verstellstift (29) in seine Offenstellung gesteuertem Verschlußteil (14) ein Schenkelteil (15) desselben die Abstufung (36, 37; 42) des Verstellstiftes (29) hintergreift und den Verstellstift (29) formschlüssig gegen eine Verstellung desselben parallel zu seiner Abstehrichtung blockiert.

2. Gerät nach Anspruch 1, bei dem der Verstellstift (29) zylindrisch ausgebildet ist, dadurch gekennzeichnet, daß die Abstufung (36,37) durch einen axialen Begrenzungsbereich eines Einstiches (38) in dem zylindrisch ausgebildeten Verstellstift (29) gebildet ist. (Fig. 7)

## Claims

1. A recording and/or reproducing apparatus (1) for a cassette (2) accommodating a record carrier (13) and comprising a rectangular housing (3) having an upper wall (4), a lower wall (5) and four side walls (6, 7, 8, 9), at least one (6) of said side walls having at least one access opening (10, 11, 12), and a shutter (14) for closing the access opening (10, 11, 12), which shutter is movable between a closed position and an open position, which apparatus comprises a cassette holder (20) adapted to receive a cassette (2) and an actuating device (26) adapted to move the shutter (14) of the cassette (2) held by the cassette holder (20), which actuating device comprises a movable carrying member (28) and an actuating pin (29) which projects from the carrying member (26) in a projection direction, which is engageable with the shutter (14) of the cassette (2), and which controls the movement of the shutter (14) during a relative movement between the actuating pin and the shutter in a direction transverse to the projection direction of said pin, characterized in that the actuating pin (29) has at least one stepped portion (36, 37; 42) which extends substantially transversely of the projection direction of said pin and, when the shutter (14) has been moved to its open position by the actuating pin (29), a flange portion (15) of said shutter engages behind the stepped portion (36, 37; 42) of the actuating pin (29) and positively blocks a movement of the actuating pin parallel to the projection direction of said pin.

2. An apparatus as claimed in Claim 1, in which the actuating pin (29) is cylindrical, characterized in that the stepped portion (36, 37) is constituted by an axial bounding surface of a recess (38) in the cylindrical actuating pin (29). (Fig. 7)

## Revendications

1. Appareil d'enregistrement et/ou de reproduction (1) pour une cassette (2) contenant un support d'enregistrement (13), qui comprend un boîtier parallélépipédique (3) avec une paroi supérieure (4), une paroi inférieure (5) et quatre parois latérales (6, 7, 8, 9), dont au moins une (6) comporte une ouverture de passage (10, 11, 12), et une pièce de fermeture (14) mobile entre une position de fermeture et une position d'ouverture, destinée à fermer l'ouverture de passage (10, 11, 12), comprenant un dispositif de logement de cassette (20) destiné à recevoir une cassette (2) ainsi qu'un dispositif de déplacement (26) prévu pour déplacer la pièce de fermeture (14) de la cassette (2) retenue dans le dispositif de logement de cassette (20), qui comporte un support mobile ( 28) et un doigt de déplacement (29) qui fait saillie du support dans une direction d'extension, qui peut être amené en contact avec la pièce de fermeture (14) de la cassette (2), et qui commande le déplacement de celle-ci lors d'un mouvement relatif entre lui et la pièce de fermeture (14), perpendiculaire à sa direction d'extension, caractérisé en ce que le doigt de déplacement (29) comporte au moins un épaulement (36, 37; 42) qui s'étend sensiblement transversalement à sa direction d'extension et que, lorsque la pièce de fermeture (14) est commandée par le doigt de déplacement (29) dans sa position d'ouverture, une section (15) de la pièce de fermeture (14) s'engage en regard de l'épaulement (36, 37; 42) du doigt de déplacement (29) et bloque, par épousement de forme, le doigt de déplacement (29), en l'empêchant de se déplacer parallèlement à sa direction d'extension.

2. Appareil suivant la revendication 1, dans lequel le doigt de déplacement (29) est cylindrique, caractérisé en ce que l'épaulement (36, 37) est formé par une région de délimitation axiale d'une gorge (38) ménagée dans le doigt de déplacement cylindrique (29). (Fig. 7).
